# EUROPÄISCHE PATENTSCHRIFT

(11) **EP 0 444 224 B1**
(45) Veröffentlichungstag und Bekanntmachung des Hinweises auf die Patenterteilung: **14.12.1994**
(21) Anmeldenummer: 90103781.2
(22) Anmeldetag: 27.02.1990
(51) Int. Cl.: B29C 47/22, B29C 67/22

(54) **Reguliereinrichtung an einem Extruder-Düsenkopf**
Extrusion head regulator
Dispositif de régulation dans la tête d'extrusion

(43) Veröffentlichungstag der Anmeldung: 04.09.1991
(73) Patentinhaber: NEDERLANDSE PILLO-PAK MAATSCHAPPIJ B.V., 6961 EC Eerbeek (NL)
(72) Erfinder: Bergeman, Jacobus Frederik, NL-6971 HR Brummen (NL)
(74) Vertreter: Meys, Hildegard, Dr.rer.nat.

(56) Entgegenhaltungen:
- EP-A- 0 036 757
- DE-C- 3 126 125
- FR-A- 2 267 876
- FR-A- 2 363 424
- FR-E- 93 007
- GB-A- 1 214 273
- US-A- 3 193 547
- US-A- 4 029 458
- US-A- 4 753 767

## Beschreibung

Die Erfindung bezieht sich auf eine Reguliereinrichtung für den Düsenkopf-Ringspalt am Austrittsende eines kontinuierlich arbeitenden Extruders, gemäß dem Oberbegriff des Anspruchs 1.

Eine solche Einrichtung ist aus DE-C-31 26 125 bekannt.

Auf einem derartigen Extruder mit Ringdüse aufweisendem Düsenkopf lassen sich Schaums toff-Materialbahnen fertigen, wobei schäumfähige Kunststoffmasse im Extrusionsverfahren durch die Ringdüse in Form eines Schlauchgebildes extrudiert und zu einer ebenen Materialbahn flachgelegt wird. Der am Extruder-Austrittsende sitzende Düsenkopf dafür ist mehrteilig ausgebildet und weist einen im Ringraum axial angeordneten zentralen Verdränungskörper auf, dem in Extrusionsrichtung ein innerer Lippenteil und ein äußerer Lippenteil nachgeordnet sind. Der innere Lippenteil ist an dem Düsenmantel befestigt, der äußere Lippenteil ist auf einem dem in Extrusionsrichtung gelegenen Ende des Verdrängungskörpers aufsitzenden Hülsenteil befestigt. Die Ringspalt-Grösse zwischen dem inneren Lippenteil und dem äußeren Lippenteil läßt sich, wie beispielsweise in DE-C-31 26 125 beschrieben, durch axiales Verschieben, insbesondere des äußeren Lippenteils, im vorgegebenen Bereich ohne Störung des laufenden Produktionsprozesses auf die gewünschte Dicke der zu extrudierenden Materialbahn einstellen, justieren und variieren. Das aus dem Ringspalt schlauchförmig austretende Schaumstoff-Extrudat wird über einen Kühldorn abgezogen, an dem in Abzugrichtung hinteren Ende des Kühldornkörpers mittels einer Schneidevorrichtung aufgeschlitzt, flachgelegt und als flache Materialbahn lager- und versandgerecht aufgerollt.

Schwierigkeiten treten auf, wenn die Dicke (Stärke) der Materialbahn geändert werden soll. Es ist wünschenswert, auf ein und derselben Maschine Schaumstoff-Folienbahnen mit beliebig unterschiedlichen Stärken im Bereich von möglichst 0,5 bis 12 mm fertigen zu können. Wenn derart relativ große Änderungen der Ringspalt-Größe bei der aus DE-C-31 26 125 bekannten Konstruktion durch axiale Verschiebung des äußeren Lippenteils dort vorgenommen werden, wird dort gleichzeitig die Raumgröße des Düsengangraumes zur Ringdüse entsprechend geändert, was den Materialdurchsatz innerhalb des Düsenkopfes beeinflußt und bei Verarbeitung von verschäumfähiger Masse das sehr empfindliche Spritzmaterial beeinträchtigt. Die Strömungsverhältnisse ändern sich dabei. Es läßt sich zwar eine Justierung, etwa in der Größenordnung bis maximal 0,1 mm, ohne Betriebsbeeinträchtigung des kontinuierlich laufenden Extrusionsvorgangs dadurch erreichen, daß man auch den inneren Lippenteil verschiebbar einrichtet. Das ist jedoch ebenfalls nicht vorteilhaft, weil auch dadurch die Materialzuführung im Düsenkopf leidet; der Zuführgang wird relativ enger. Bei Konstruktionen, bei denen die Ringspaltgröße sich unabhängig von der Raumgröße des Düsenganges regeln läßt, bedingt eine größere Änderung des Ringspaltes von mehr als ca. 0,1 mm eine axiale Verschiebung der äußeren Lippe auf der Hülse, wozu die Spannmittel, z.B. Spannschrauben, mit denen zum Beispiel der äußere Lippenteil auf der Hülse arretiert ist, gelöst, dann der Lippenteil auf die gewünschte Spaltbreite axial verschoben und anschließend die Spannelemente wieder angezogen und der Lippenteil in der neuen Stellung arretiert werden müssen. Dabei muß, damit das Bedienungspersonal das Schraub- und Spannwerkzeug ansetzen kann, der Abzugvorgang des Extrudats unterbrochen und das schlauchförmige Extrudat hinter dessen Austrittsstelle am Ringspalt und vor dessen Auflage auf dem Kühldornkörper zertrennt werden. Selbst wenn das Lösen und Wiederbefestigen der Spannschrauben und das Verschieben des Lippenteils rasch und präzise vorgenommen werden, bildet sich infolge des kontinuierlich austretenden Extrudats, das während dieses Arbeitsvorgangs nicht kontinuierlich abgezogen werden kann, eine gewisse Menge Ausschuss und Abfall; außerdem kann dadurch unangenehme Verschmutzung der Apparatur entstehen und es kann - falls wegen Umweltschutzvorschriften anstelle von unbrennbaren Halogenkohlenwasserstoffen als Treibmittel Butan oder Pentan in der extrudierten Schaumstoffmasse vorhanden ist - Brandgefahr auftreten, weil Treibmittel an den Bruchstellen des zerteilten Extrudats in die Umgebungsatmosphäre entweicht. Stillsetzen des Extruders während dieser Zeit bringt ebenfalls erhebliche Nachteile, weil dabei der Zuführgang verstopfen kann und weil infolge der notwendigen Treibmittel-Einarbeitung in das im Extruder zu plastifizierende Material die Wiederanlaufzeit der Maschine relativ lange dauert.

Der Erfindung liegt die Aufgabe zugrunde, eine Reguliereinrichtung in Vorschlag zu bringen, die es ermöglicht, ohne Beeinträchtigung der schäumfähigen Masse infolge Änderung der Raumgröße und der Strömungsverhältnisse im Düsengangraum zur Ringdüse, sowie ohne Stillsetzen der Maschine und ohne Unterbrechung des kontinuierlichen Abzugs des schlauchförmigen Extrudats und ohne dessen Zerreißen oder sonstige Beschädigung die Ringspalt-Weite zwischen innerer Düsenlippe und äußerer Düsenlippe innerhalb eines Bereiches von mehreren Millimetern zu verstellen.

Zur Lösung dieser Aufgabe dient erfindungsgemäß eine Reguliereinrichtung für ein wie im Oberbegriff des Anspruchs 1 angegebenes Extrusionswerkzeug, die die im Kennzeichen des Anspruchs 1 aufgeführten Merkmale aufweist. Weitere vorteilhafte und zweckmäßige Ausgestaltungen der Erfindung gehen aus den Unteransprüchen hervor.

Mit der erfindungsgemäßen Reguliereinrichtung wird es möglich, während des kontinuierlich laufenden Extrusionsverfahrens die Mantelstärke des kontinuierlich gebildeten und kontinuierlich abgezogenen schlauchförmigen Extrudats in gewünschter spezifischer eingestellter Dicke genau zu dimensionieren, zu regulieren und/oder zu ändern, ohne dass das Extrudat beschädigt wird. Das hat den Vorteil, dass gegenüber der bisher bekannten Arbeitsweise Maschinenzeit gespart, Geräteverschmutzungsgefahr behoben sowie Material-Ausschuss und -Abfall verringert wird. Das hat den weiteren Vorteil, dass man brand- und explosionssicher mit Butan und Pentan als Treibmittel in der zu extrudierenden Kunststoff-Schaummasse arbeiten kann.

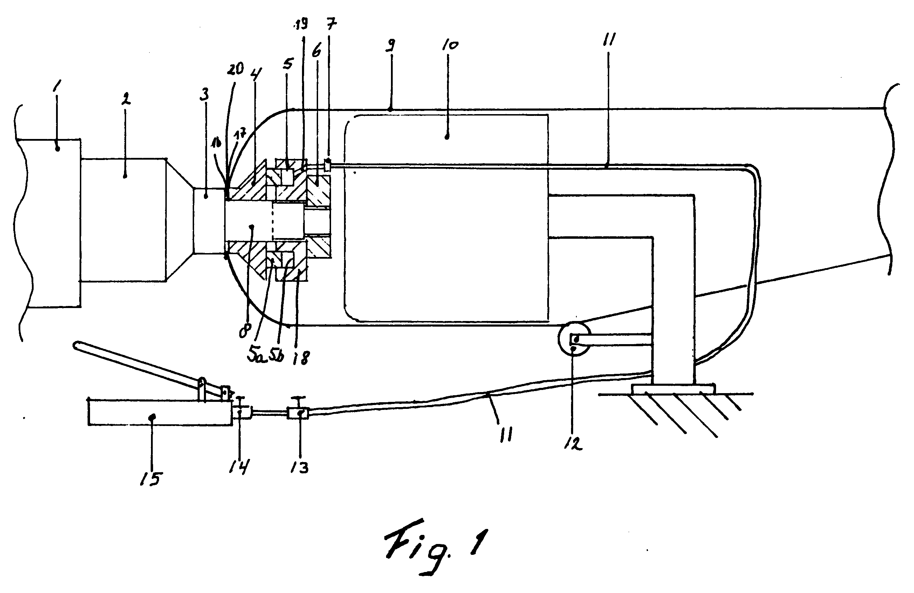

In der Zeichnung ist eine Ausführungsform der Erfindung beispielsweise dargestellt.
Es zeigt schematisch
- Fig. 1: eine Vorrichtung zur Herstellung von Schaumstoffbahnen, eingestellt auf die Fertigung von Bahnen mit relativ geringer Dicke, und

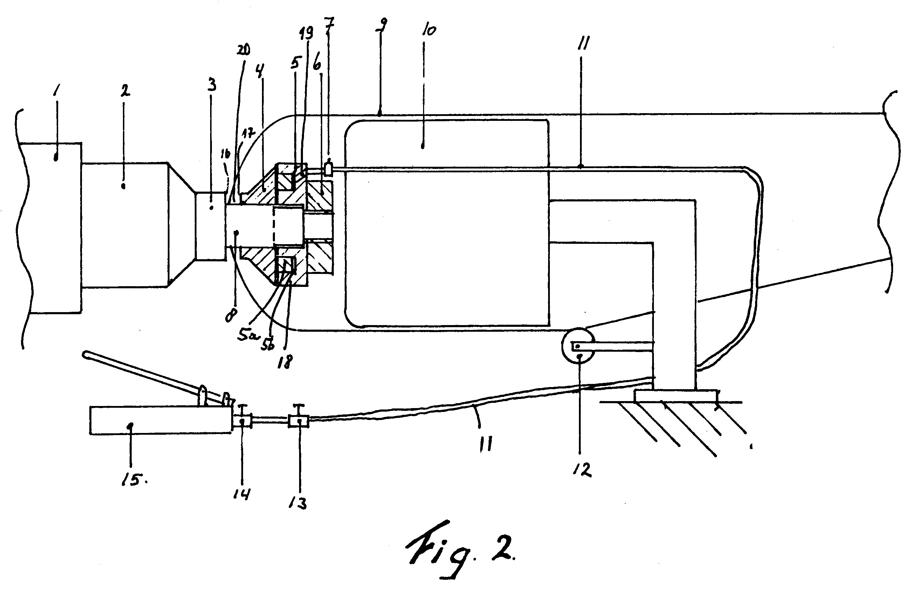

- Fig. 2: dieselbe Vorrichtung der Fig. 1, eingestellt auf die Fertigung von Bahnen mit relativ grösserer Dicke.

In den Figuren ist mit 1 der Extruder und mit 2 das Spritzwerkzeug bezeichnet. Das Spritzwerkzeug weist eine innere Düsenlippe 3 und eine äussere Düsenlippe 4 auf. Zwischen den beiden Düsenlippen 3 und 4 ist ein Lippen-Ringspalt 20 ausgebildet, der den Düsenspalt bildet. Flanschansätze 16 am inneren Lippenteil 3 und 17 am äusseren Lippenteil 4 sichern die Ausrichtung des Strömungswegs der extrudierten Masse am Düsenspalt etwa senkrecht zur Extrusionsrichtung.

Im Extruder 1 wird in bekannter Weise das Kunststoffmaterial mit dem Bläh- und Treibmittel zu einer aufschäumbaren Masse homogenisiert. Das Aufschäumen der Masse erfolgt beim Austritt aus dem Ringspalt 20. Das schlauchförmige Schaumstoff-Extrudat 9 wird über einen Kühldornkörper 10 abgezogen und an einer in Abzugrichtung hinter dem Kühldornkörper 10 gelegenen Stelle mit einer Schneidevorrichtung 12, zum Beispiel einem rotierenden Messer, aufgeschlitzt. Über (nicht gezeigte) Walzen und Rollen wird das aufgeschlitzte Schaumstoff-Produkt bahnförmig flachgelegt und zu versand- bzw. lagergerechter Rollenware aufgewickelt.

Es werden in der Praxis für unterschiedliche Verwendungszwecke Schaumstoff-Bahnen verschiedener Dicke, etwa im Bereich von 0,5 bis 12 mm, aber sonst gleichen Eigenschaften benötigt. Da das Extrusionsverfahren ein kontinuierliches Verfahren ist, muss man - wenn man das Stillsetzen der Maschine vermeiden will - die Dicke des Extrudats, des schlauchförmigen Formlings, bei laufendem Verfahren verstellen. Dazu ist bei der Erfindung eine lösbare Verbindung 5 zwischen der äusseren Düsenlippe 4 und einem raumfest angeordneten Ringkörper 18 vorhanden. Die lösbare Verbindung 5 ist als Passfeder-Nut-Kombination ausgebildet. Die Passfeder befindet sich als ringförmiger Ansatz 5a an der vorderen Endseite der äusseren Düsenlippe 4; die Nut ist als ringförmige Ausnehmung 5b in dem Ringkörper 18 vorhanden. Die äussere Düsenlippe 4 sitzt axial verschiebbar auf einem mittig axial angeordneten Hülsenkörper 8. Der Hülsenkörper 8 ist mit der inneren Düsenlippe 3 fest verbunden. Der Ringkörper 18 ist auf dem Hülsenkörper 8 befestigt. Als zusätzliche Halterung ist eine Sicherheitsmutter 6 vorhanden.

Der Ringkörper 18 weist einen Durchtrittskanal 19 für einen Druckschlauch 11 auf, der durch den Innenraum des schlauchförmigen Formlings 9 und in axialer Richtung durch das Innere des Kühldornkörpers 10 geführt ist und hinter der Schneidevorrichtung 12 aus dem aufgeschlitzten Formling mit einer ausserhalb des Formling-Innenraums befindlichen Hydraulikpumpe 15 in Verbindung steht. Durch den Druckschlauch 11 wird nach Bedarf von der Pumpe 15 ein hydraulisches Druckmittel in den Innenraum der lösbaren Verbindung 5 gepumpt bzw. daraus abgezogen. Als Stellelemente zur Regulierung des Flusses des hydraulischen Druckmittels sind ein Einlaßventil 7 vor dem Innenraum der Verbindung 5, ein Auslassventil 14 an der Hydraulikpumpe 15 und ein die Strömungsgeschwindigkeit regulierendes Ventil 13 in dem Druckschlauch 11 vorhanden.

Die als lösbare Verbindung 5 in der erfindungsgemässen Reguliereinrichtung angeordnete Passfeder-Nut-Kombination ist als eine Art hydraulisch antreibbare Spannvorrichtung ausgebildet. Der Hülsenkörper 8 ist auf seinem den äusseren Düsenlippenteil 4 und das Ringelement 18 tragenden vorderen Längsteil mit einem Aussengewinde bestückt, mit dem ein Innengewinde des Lippenteils 4 und des Ringelements 18 zusammenwirken. Der ringförmige Ansatz 5a am Lippenteil 4 arbeitet wie ein Kolben, der passgenau in der als Zylinder dienenden Ringnut 5b des Ringelements 18 hin- und herschiebbar ist. Wenn hydraulisches Medium, zum Beispiel hydraulisches Öl, durch den Kanal 19 eingepresst wird, bewegt sich der kolbenartig arbeitende Lippenteil 4 axial in Richtung auf die innere Düsenlippe 3 hin. Der Ringspalt 20 wird enger. Es entsteht ein mit Druckmittel gefüllter zylindrischer Raum zwischen Kolben und Nut. Wenn das Druckmittel wieder abfliesst, bewegt sich der Lippenteil 4 axial in Richtung von der inneren Düsenlippe 3 weg. Der Ringspalt 20 wird wieder breiter.

Die Druckbeaufschlagung durch die Druckmittelleitung 11 kann in beliebiger bekannter Weise vorgenommen werden, zweckmässig mit Öl als Druckmittel über die Pumpe 15 und dieser zugeordnete (nicht näher veranschaulichte) bekannte Steuer-Anordnungen für den Durchfluss des Druckmittels. Es ist möglich und konstruktiv einfach, als lösbare Verbindung 5 ein im Handel fertig montiert erhältliches im wesentlichen aus einem ringförmigen, eine ringförmige Ausnehmung aufweisenden Teil und einem dazu passenden ringförmigen Kolbenteil bestehendes hydraulisches Element einzusetzen und dieses mit dessen den Kolbenteil tragender Seitenfläche an der vorderen Endfläche des äusseren Düsenlippenteils 4 zu befestigen. Dann dient der Kolbenteil dieses Elementes als ringförmiger Ansatz 5a und dessen ringförmige Ausnehmung dient als Ringnut 5b der erfindungsgemässen Reguliereinrichtung.

Erfindungsgemässe Reguliereinrichtungen eignen sich speziell für die Durchführung von Verfahren zur Herstellung von Bahnenmaterial aus geschäumten Thermoplasten, wie Polystyrolen und Polyolefinen, wobei das Kunststoff-Ausgangsmaterial aufgeschmolzen und mit Treibmittel, beispielsweise Butan oder Pentan, vermischt, in Schlauchform extrudiert, gegebenenfalls aufgeweitet, abgekühlt und zur Bahnenform aufgeschlitzt und flachgelegt wird. Mit der erfindungsgemässen Reguliereinrichtung wird es möglich, Bahnenmaterial unterschiedlicher Dicke im Bereich von etwa 0,5 bis 12 mm in kontinuierlicher Arbeitsweise ohne Unterbrechung des Schlauchabzugs zu fertigen.

### Liste der Bezugszeichen

- 1: Extruder
- 2: Spritzwerkzeug
- 3: Innere Düsenlippe
- 4: Äussere Düsenlippe
- 5: lösbare Verbindung
- 5a: ringförmiger Ansatz am Lippenteil 4
- 5b: Ringnut im Ringelement 18
- 6: Sicherheitsmutter
- 7: Einlassventil
- 8: Hülsenkörper
- 9: schlauchförmiger Formling aus Schaummasse
- 10: Kühldornkörper
- 11: Druckmittelleitung
- 12: Schneidevorrichtung
- 13: Strömungsgeschwindigkeit regulierendes Ventil
- 14: Auslassventil an Pumpe 15
- 15: Hydraulikpumpe
- 16: Flanschansatz am inneren Lippenteil 3
- 17: Flanschansatz am äusseren Lippenteil 4
- 18: Ringkörper
- 19: Druckmittelkanal im Ringkörper
- 20: Lippen-Ringspalt

## Patentansprüche

1. Reguliereinrichtung für den Düsenlippen-Ringspalt eines zur Herstellung von Schaumstoff-Bahnenmaterial an dem Austrittsende eines kontinuierlich arbeitenden Extruders (1) ansitzenden, mehrteilig ausgebildeten und eine mit einer inneren Düsenlippe (3) und einer äußeren Düsenlippe (4) sowie dazwischen gebildetem Ringspalt (20) bestückte Ringdüse aufweisenden Düsenkopfes, aus welchem ein sich aus austretender schäumfähiger Kunststoffmasse bildender schlauchförmiger Formling (9) abgezogen, über einen Kühldornkörper (10) geführt, mittels einer Schneidevorrichtung (12) aufgetrennt und flachgelegt wird, wobei die äußere Düsenlippe (4) auf einem mit der inneren Düsenlippe (3) verbundenen Hülsenkörper (8) axial verschiebbar sitzt, ohne daß das Verschieben den laufenden Produktionsprozess stört, gekennzeichnet durch eine an der in Abzugsrichtung gelegenen Endseite der äußeren Düsenlippe (4) ansitzende Passfeder-Nut-Kombination als lösbare Verbindung (5) zu einen auf dem Hülsenkörper (8) aufsitzenden Ringelement (18), die über einen durch den Innenraum des schlauchförmigen Formlings (9) und durch das Innere des Kühldornkörpers (10) hindurch bis über die durch die Anordnung der rotierenden Schneidevorrichtung (12) festgelegte Schlauchtrennstelle hinaus geführten Druckschlauch (11) für ein hydraulisches Medium mit einer Hydraulikpumpe (15) hydraulisch verstellbar verbunden ist.

2. Reguliereinrichtung nach Anspruch 1, dadurch gekennzeichnet, daß der Passfederteil (5a) der Passfeder-Nut-Kombination als Ansatz an der äußeren Düsenlippe (4) ansitzt und der Nutteil (5b) der Passfeder-Nut-Kombination als das Ringelement (18) ausgebildet ist.

3. Reguliereinrichtung nach Anspruch 1 oder 2, gekennzeichnet durch Stellelemente (7, 13, 14), die den Durchfluß des hydraulischen Mediums von der Pumpe (15) durch den Druckschlauch (11) in die Verbindung (5) steuern.

4. Reguliereinrichtung nach den Ansprüchen 1 bis 3, gekennzeichnet durch einen an der spaltbildenden Seite am äußeren Lippenteil (4) ausgebildeten ringförmigen Flanschansatz (17) und einen an dem inneren Lippenteil (3) an dessen spaltbildender Seite ansitzenden ringförmigen Gegenflansch (16).

5. Reguliereinrichtung nach den Ansprüchen 1 bis 4, gekennzeichnet durch eine auf dem Hülsenteil (8) sitzende und der Verbindung (5) zugeordnete Sicherheitsmutter (6).

## Claims

1. Regulating device for the annular die lip orifice at a die head of multipartite design for manufacturing plastic foam sheet material located at the outlet end of a continuously operating extruder (1) and being equipped with a ring die with an inner die lip section (3) and an outer die lip section (4) with an annular lip gap (20) formed between the two lip sections and the expandable plastic material emerging through the die head in the form of a tubular extrudate (9), being taken off, guided over a cooling mandrel element (10), slit open by means of a cutting device (12) and laid flat and said outer lip section (4) being seated in axially displaceable fashion on a sleeve member (8), joined to the inner lip section (3) so that displacement does not impair the running manufacturing process, comprising a fitting tongue-and-groove combination located at the forward end face of the outer die lip section (4) and arranged as releasable connection (5) to a ring element (18), seated on the sleeve member (8) and the connection (5) being hydraulically adjustable connected to a hydraulic pump (15) by means of a pressure hose (11) for an hydraulic medium and said pressure hose being guided through the interior of the tubular extrudate (9) and through the interior of the cooling mandrel element (10) downstream and exiting the extrudate slitting place, fixed by the arrangement of the rotatable cutting device (12).

2. Regulating device according to claim 1, characterised in that the fitting tongue (5a) of the fitting tongue-and-groove combination is located as an extension on the outer die lip (4) and the groove (5b) of the fitting tongue-and-groove combination is arranged to form the ring element (18).

3. Regulating device according to claims 1 and 2, characterised in that there are adjusting elements (7, 13, 14) for regulating the flow of the hydraulic medium from the pump (15) through the pressure hose (11) to the connection (5).

4. Regulating device according to claims 1 through 3, characterised in that there are an annular flange extension (17) at the die gap face of the outer die lip (4) and a counter-flange (16) at the die gap face of the inner die lip (3).

5. Regulating device according to claims 1 through 4, characterised in that there is a locknut (6) seated on the sleeve member (8) and attached to the connection (5).

## Revendications

1. Dispositif de régulation pour l'interstice annulaire de lèvre de buse d'une tête de buse, destinée à la fabrication de matériau alvéolaire se présentant en bande, placée à l'extrémité de sortie d'une extrudeuse (1) travaillant en continu, réalisée en plusieurs parties et présentant une buse annulaire équipée d'une lèvre de buse intérieure (3) et d'une lèvre die buse extérieure (4), ainsique d'un interstice annulaire (20) constitué entre elles, tête de buse d'où est extraite une ébauche (9) sortant en formant un tuyau, constituée d'une masse synthétique susceptible de mousser, en étant guidée sur un corps de mandrin de refroidissement (10), coupée sur un dispositif de découpage (12) et déployée à plat, la lèvre de buse extérieure (4) reposant, en étant déplaçable axialement, sur un corps de douille (8) relié à la lèvre de buse intérieure (3), sans que le déplacement gêne le processus de production en cours, caractérisé par une combinaison rainure-clavette paralléle, placée sur une face d'extrémité , située dans la direction de l'extraction, de la lèvre de buse extérieure (4), faisant office de liaison amovible (5) vis-à-vis d'un élément annulaire (18) placé sur le corps de douille (8) et reliée hydrauliquement, d'une façon permettant un réglage, à une pompe hydraulique (15), par l'intermédiaire d'un tuyau à pression (11), prévu pour un fluide hydraulique et guidé dans l'espace intérieur de l'ébauche (9) en forme de tuyau et à l'intérieur du corps de mandrin de refroidissement (10), jusqu'à dépasser le point de séparation du tuyau, fixé par l'agencement du dispositif de découpage (12) rotatif.

2. Dispositif de régulation selon la revendication 1, caractérisé en ce que la partie clavette parallèle (5a) de la combinaison à rainure et clavette parallèle repose, à titre d'appendice, sur la lèvre de buse extérieure (4) et la partie rainure (5b) de la combinaison à rainure et clavette parallèle est réalisée en constituant l'élément annulaire (18).

3. Dispositif de régulation selon la revendications 1 ou 2, caractérsé en ce que des éléments de réglage (7, 13, 14) commandent le débit de fluide hydraulique venant de la pompe (15) et passant, à travers le tuyau à pression (11), dans la liaison (5).

4. Dispositif de régulation selon les revendications 1 à 3 caractérisé par un appendice en bride (17), à forme annulaire, réalisé sur le côté constituant l'interstice, sur la partie de lèvre extérieure (4), et par une contrebride annulaire (16), reposant sur la partie de lèvre intérieure (3), sur sa face constituant l'interstice.

5. Dispositif de régulation selon les revendications 1 à 4, caractérisé par un écrou de sécurité (6) monté sur la partie douille (8) et associé à la liaison (5).
